# EUROPEAN PATENT SPECIFICATION

(11) **EP 3 886 603 B1**
(45) Date of publication and mention of the grant of the patent: **19.04.2023**
(21) Application number: 19755641.8
(22) Date of filing: 21.08.2019
(51) Int. Cl.: A23L 3/358, A23B 4/02, A23B 4/023, A23L 27/40

(54) **PARTICULATE FOOD PRESERVATIVE COMPOSITION**
TEILCHENFÖRMIGE LEBENSMITTELKONSERVIERUNGSMITTELZUSAMMENSETZUNG
COMPOSITION PARTICULAIRE DE CONSERVATION D'ALIMENTS

(30) Priority: 26.11.2018 EP 18208323
(43) Date of publication of application: 06.10.2021
(73) Proprietor: Purac Biochem B.V., 4206 AC Gorinchem (NL)
(72) Inventor: KUSUMAWARDANI, Heny, 3067 GJ Rotterdam (NL); VAN HARMELEN, Edwin, 4206 AC Gorinchem (NL); VERHEEZEN, Jacobus Johannes Adriana Maria, 4206 AC Gorinchem (NL)
(74) Representative: Nederlandsch Octrooibureau
(86) International application number: PCT/EP2019/072390
(87) International publication number: WO 2020/108812

(56) References cited:
- WO-A1-2014/021719
- WO-A1-2014/172483
- WO-A1-2017/005714
- WO-A2-2009/155113
- THANIKARN SANSAWAT ET AL: "Inhibition of Listeria monocytogenes in Full- and Low-Sodium Frankfurters at 4, 7, or 10°C Using Spray-Dried Mixtures of Organic Acid Salts", JOURNAL OF FOOD PROTECTION, vol. 76, no. 9, 1 September 2013 (2013-09-01), pages 1557-1567, XP055567759, US ISSN: 0362-028X, DOI: 10.4315/0362-028X.JFP-12-388 cited in the application
- Anonymous: "Reduction and inhibition of Listeria monocytogenes in cold-smoked salmon by Verdad N6, a buffered vinegar fermentate, and UV-C treatments - ScienceDirect", , 1 November 2018 (2018-11-01), XP055567768, Retrieved from the Internet: URL:https://www.sciencedirect.com/science/ article/pii/S0168160518308791 [retrieved on 2019-03-12] cited in the application
- F.K Stekelenburg ET AL: "Enhanced inhibition of Listeria monocytogenes in Frankfurter sausage by the addition of potassium lactate and sodium diacetate mixtures", Food Microbiology, 1 January 2003 (2003-01-01), pages 133-137, XP055567775, DOI: 10.1016/S0740-0020(02)00098-9 Retrieved from the Internet: URL:https://ac.els-cdn.com/S07400020020009 89/1-s2.0-S0740002002000989-main.pdf?_tid= 2e3202df-8963-4f12-9702-c2bf5541e84c&acdna t=1552388608_13d080985bcccdcfbfa9bb92c2545 86a
- Anonymous: "Preservation and Physical Property Roles of Sodium in Foods - Strategies to Reduce Sodium Intake in the United States - NCBI Bookshelf", , 1 January 2010 (2010-01-01), XP055567780, Retrieved from the Internet: URL:https://www.ncbi.nlm.nih.gov/books/NBK 50952/?report=printable [retrieved on 2019-03-12]
- Anonymous: "Agglomerated food powder - Wikipedia", , 24 November 2019 (2019-11-24), XP055727798, Retrieved from the Internet: URL:https://en.wikipedia.org/wiki/Agglomer ated_food_powder [retrieved on 2020-09-04]
- K. Dhanalakshmi ET AL: "Agglomeration of Food Powder and Applications", CRITICAL REVIEWS IN FOOD SCIENCE AND NUTRITION, vol. 51, no. 5, 11 April 2011 (2011-04-11) , pages 432-441, XP055518981, USA ISSN: 1040-8398, DOI: 10.1080/10408391003646270

## Description

### TECHNICAL FIELD OF THE INVENTION

The present invention relates to particulate food preservative compositions that can be used to preserve fresh foods, such as fish, meat and vegetables. The preservative composition is defined by the claims.

The preservative composition of the present invention offers the advantage that, when used in e.g. dry curing methods, it is more effective against certain pathogens (e.g. *Listeria)* than chloride salt *per se.* Furthermore, the preservative composition can be applied in dry curing methods in the same way as ordinary salt.

The present invention also provides a process of preparing a preservative granulate as defined by the claims.

### BACKGROUND OF THE INVENTION

Salt (sodium chloride) has been used as a preservative since ancient times. Curing with salt, known as dry curing, is a preservation method that comprises applying salt to the outside of a fresh food and storing it. It's one of the most ancient ways of curing fish and meats. When applied in this way, salt inhibits the growth of microorganisms on these foods by drawing water out of microbial cells through osmosis. Concentrations of salt up to 20% are required to kill most species of unwanted bacteria. However, some pathogens, such as *Listeria monocytogenes,* have the capacity to tolerate salt stress conditions that are lethal to most other micro-organisms.

*Listeria* has been found in fish, meats, vegetables and fruit, milk and dairy products. Pasteurization and sufficient cooking kill *Listeria;* however, contamination may occur after cooking and before packaging. *Listeria* is responsible for listeriosis, a rare but potentially lethal foodborne illness. The case fatality rate for those with a severe form of infection may approach 25%. Salmonellosis, in comparison, has a mortality rate estimated at less than 1%.

Commercially available curing salt (also called Prague powder) typically contains sodium chloride in combination with nitrates and/or nitrites. A typical example is a powder containing 93.75 wt.% sodium chloride and 6.25 wt.% sodium nitrite.

Sansawat et al. (Inhibition of Listeria monocytogenes in full- and low-sodium frankfurters at 4, 7, or 10°C using spray-dried mixtures of organic acid salts, J Food Prot. (2013); 76(9):1557-1567) describe a study that was conducted to assess *Listeria monocytogenes* inhibition and the physicochemical and organoleptic characteristics of frankfurters that were prepared with organic acid salts as spray-dried powders (sodium lactate-sodium acetate, sodium lactate-sodium acetate-sodium diacetate, and potassium acetate-potassium diacetate) or liquids (sodium lactate, sodium lactate-sodium diacetate, potassium lactate, and potassium lactate-sodium diacetate). Full-sodium (1.8% salt) and low-sodium (1.0% salt) frankfurters were prepared according to 10 and 5 different formulations (n-3), respectively, and were dip inoculated with a six-strain cocktail of *L. monocytogenes.* Populations of *Listeria* and mesophilic aerobic bacteria were quantified during storage at 4, 7, and 10°C for up to 90 days. Four powders and two liquid full-sodium formulations and one powder low-sodium formulation, all of which contained diacetate except for 1% sodium lactate-sodium acetate powder, completely inhibited *Listeria* growth at 4°C. However, *Listeria* grew in full-sodium formulations at 10°C and in low-sodium formulations at 7 and 10°C except for the formulation containing 0.8% potassium acetate-0.2% potassium diacetate powder.

Heir et al. (Reduction and inhibition of Listeria monocytogenes in cold-smoked salmon by Verdad N6, a buffered vinegar fermentate, and UV-C treatments, International Journal of Food Microbiology 10.1016/j.ijfoodmicro.2018.10.026.) carried out a study in which cold-smoked salmon was prepared according to the following procedure:
- salting salmon fillets in separate plastic bags using NaCl (3% w/w), and adding Verdad^{®} N6 (0.1-2 % w/w);
- the plastic bags with salmon fillets and salts were sealed under mild vacuum and stored at 4°C for 64-68 hrs;
- after salt distribution, the salmon fillets were unpacked and cold-smoked in a programmable smoking cabinet.

The smoked salmon fillets were surface contaminated with a mix of *L. monocytogenes.* Levels of *L. monocytogenes* were determined during vacuum pack refrigerated storage for 29 days. The use of Verdad^{®} N6 resulted in increased lag times and reduced growth rates of *L. monocytogenes.*

Stekelenburg (Enhanced inhibition of Listeria monocytogenes in Frankfurter sausage by the addition of potassium lactate and sodium diacetate mixtures, Food Microbiology 20 (2003) 133-137) describes the addition of 2-3% of a solution containing a mixture of potassium lactate and sodium diacetate to frankkurters to inhibit the development of L. sake and L. monocytrogenes.

Anonymous (Preservation and Physical Property of Sodium in Foods - Strategies to Reduce Sodium Intake in the United States - NCBI Bookshelf", 1 January 2010) reviews the role of sodium in food preservation.

WO 2009/155113 describes a method of preparing a composition by mixing salt and an ingredient and pressing the mixture to form an agglomerated composition. The examples describe the compacting of a mixture of sodium chloride and orange flavour powder and of a mixture of sodium chloride and garlic powder.

WO 2017/005714 describes a process to prepare a free flowing salt product by compacting a mixture or NaCl and KCI using a pressure of 40-400 mPa, followed by crushing and absorption of one or more agents into the salt particles.

WO2014/021719 relates to a preservative vinegar powder comprising (i) vinegar derived acid that is partly neutralized with e.g. sodium and/or potassium hydroxide and (ii) free vinegar derived acid.

WO 2014/172483 describes a salt replacer composition comprising:
15-90 wt.% KCI;
10-90 wt.% NaCl;
0.1-5 wt.% food grade acidulant; and
10-40 wt.% carrier.

The salt replacer is produced in granular form by drying an aqueous solution containing KCI, NaCl, acidulant and carrier.

### SUMMARY OF THE INVENTION

The present inventors have developed a particulate food preservative composition that can be used to preserve fresh foods, such as fish, meat and vegetables, that is particularly effective against micro-organisms having a high salt tolerance (halotolerant), such as *Listeria monocytogenes.*

The particulate food preservative composition of the present invention contains granules containing a chloride salt selected from sodium chloride, potassium chloride, magnesium chloride and combinations thereof as well as an alkali metal salt of an organic acid selected from acetic acid, lactic acid, propionic acid, and it can be applied in dry curing methods in the same way as ordinary kitchen salt. The presence of the alkali metal salt of an organic acid has no significant adverse effect on the organoleptic quality of the food that has been treated with the preservative composition.

The inventors have unexpectedly discovered that granules containing the chloride salt and the alkali metal salt of an organic acid can prepared by simple compaction of powder mixture comprising particles containing the chloride salt and particles containing the alkali metal salt of organic acid.

Accordingly, the particulate food preservative composition of the present invention has an aerated denstify of 0.5-10 g/mL and comprises at least 60 wt.% of preservation granules having a diameter in the range of 300-1500 µm as determined by laser diffraction, wherein the preservation granules are compacted agglomerates of:
a. particles containing at least 90 wt.% of the chloride salt, said particles having a volume weighted mean diameter in the range 30-400 µm, and
b. particles containing at least 70 wt.% of the alkali metal salt of organic acid, said particles having a volume weighted mean diameter in the range 30-400 µm, said preservation granules comprising (i) at least 20 wt.% of chloride salt selected from sodium chloride, potassium chloride, magnesium chloride and combinations thereof; and (ii) 25-65 wt.% of an alkali metal salt of an organic acid selected from acetic acid, lactic acid, propionic acid and combinations thereof; the combination of the chloride salt and the alkali metal salt of an organic acid constituting at least 80 wt.% of the dry matter that is contained in the preservation granules, wherein the particles containing the chloride salt and the particles containing the alkali metal salt of organic acid are not bonded within the preservation granules by binding agent.

The preservative composition of the present invention is easy to handle, remains homogeneous during shipping and storage, and has a relatively high bulk density. The present preservative composition offers the advantage that the chloride salt and the alkali metal salt of organic acid are provided in a fixed (optimum) ratio and that these two components can be dosed together very easily. Difficulties associated with the dosing of the alkalimetal salt of organic acid are effectively overcome by the present composition.

In comparison to a powder mixtures of chloride salt and the alkali metal salt of organic acid, the present preservative composition offers the advantage that de-mixing during transportation and/or storage is effectively minimized. Thus, compositional variations within a product batch are avoided.

The particulate food preservative composition of the present invention can be prepared in a very simple, cost-effective manner by blending (i) a chloride salt powder consisting essentially of a chloride salt selected from sodium chloride, potassium chloride, magnesium chloride and combinations thereof with (ii) a powder essentially consisting of alkali metal salt of acetic acid, lactic acid and/or propionic acid, followed by compacting.

Thus, the invention also provides a method of preparing a preservative granulate comprising the steps of:
- providing a powder blend comprising:
   (i) at least 20 wt.% of chloride salt powder having a volume weighted mean diameter in the range of 30-400 µm as determined by laser diffraction, having an aerated density of 1.1-1.6 g/mL and containing at least 80 wt.% of chloride salt selected from sodium chloride, potassium chloride, magnesium chloride and combinations thereof; and
   (ii) 25-65 wt% of an organic acid salt powder, said organic acid salt powder having a volume weighted mean diameter in the range of 30-400 µm as determined by laser diffraction, having an aerated density of 0.25-0.60 g/mL containing at least 80 wt.% of an alkali metal salt of an organic acid selected from acetic acid, lactic acid, propionic acid and combinations thereof;
   the combination of the chloride salt and the alkali metal salt of an organic acid constituting at least 80 wt.% of the dry matter that is contained in the powder blend;
- compacting said powder blend at a compaction force of 8-64 kN/cm and without using any binding agents.

### DETAILED DESCRIPTION OF THE INVENTION

A first aspect of the invention relates to a particulate food preservative composition as defined in claim 1.

The term "granule" as used herein, refers to a multi-particle entity that has been prepared by adhering primary powder particles to form an agglomerate. The preservation granules of the present invention are agglomerates of (i) particles that largely consist of chloride salt and (ii) particles that largely consist of alkali metal salt of an organic acid.

Granulation refers to the process of agglomerating particles by creating bonds between them. Bonds can be formed by compression or by using a binding agent (e.g. wet granulation).

Unless indicated otherwise, the term "salt" as used herein encompasses both anhydrous and hydrated versions of the salt.

The term "acetate" as used herein, unless indicated otherwise, also encompasses diacetates (e.g. sodium diacetate and potassium diacetate).

The particle size (diameter) distribution of the particulate food preservative composition, of the preservation granules and of other particulate materials used in the preparation of the preservation granules can suitably be determined by means of Laser diffraction (Malvern Mastersizer 3000).

The food preservative composition of the present invention has an aerated density of 0.5-1.0 g/ml, more preferably of 0.55-0.95 g/ml and most preferably of 0.6-0.9 g/ml. The aerated density of the composition can be determined by density measurements with a Hosokawa Micron Powder Characteristics Tester (PT-N model).

The water content of the food preservative composition typically is less than 15 wt.%, more preferably less than 12 wt.%, and most preferably less than 10 wt.%. Here the water content includes water that is contained in hydrated salts.

Besides the preservation granules, the preservative composition may contain other particulate ingredients, such as seasoning, sugar, anti-caking agent or curing aids.

In granulation processes particles are bonded together into granulates, wherein the bonds are formed by compression or by using a binding agent. It was unexpectedly found that the preservation granules of the present invention can be prepared by simple compaction, i.e. without the use of any binding agents. Accordingly, the particles containing the chloride salt and the particles containing the alkali metal salt of organic acid are not bonded within the preservation granules by binding agent.

In accordance with another highly preferred embodiment, the preservation granules consist of (a) particles containing the chloride salt and (b) particles containing the alkali metal salt of organic acid.

The preservative composition preferably contains at least 80 wt.% by weight of the preservation granules. More preferably, the preservation granules constitute at least 90 wt.%, most preferably at least 95 wt.% of the preservative composition.

The preservation granules in the preservative composition have a volume weighted mean diameter (D[4,3]) in the range of 300-1500 µm, more preferably in the range of 400-1200 µm and most preferably in the range of 500-1000 µm.

The particles containing at least 90 wt.% of the chloride salt that are contained within the preservation granules have a volume weighted mean diameter in the range of 30-400 µm, more preferably in the range of 50-350 µm, most preferably of 80-300 µm, as determined by laser diffraction.

The particles containing at least 70 wt.% of the alkali metal salt of organic acid that are contained within the preservation granules have a volume weighted mean diameter in the range of 30-400 µm, more preferably of 50-350 µm, most preferably of 80-300 µm, as determined by laser diffraction.

The preservation granules in the preservative composition preferably contain 25-75 wt.%, more preferably 30-72 wt.% and most preferably 35-70 wt.% of the chloride salt.

The preservation granules preferably contain 25-75 wt.%, more preferably 30-72 wt.% and most preferably 35-70 wt.% of chloride salt selected from sodium chloride, potassium chloride and combinations thereof.

The preservation granules in the preservative composition preferably contain 20-75 wt.% sodium chloride, more preferably 30-72 wt.% sodium chloride and most preferably 35-70wt.% sodium chloride.

The preservation granules contain 25-65 wt.% of the alkali metal salt of an organic acid, more preferably 27-65 wt.% of the alkali metal salt of an organic acid and most preferably 28-65 wt.% of the alkali metal salt of an organic acid.

According to a preferred embodiment, the combination of the chloride salt and the alkali metal salt of an organic acid constitutes at least 90 wt.% of the dry matter that is contained in the preservation granules.

In accordance with a particularly preferred embodiment, the combination of sodium chloride and sodium acetate constitutes at least 80 wt.%, more preferably at least 90 wt.% of the dry matter that is contained in the preservation granules.

The alkali metal salt of an organic acid that is employed in accordance with the present invention preferably is an alkali metal salt of acetic acid.

The alkali metal salt of an organic acid preferably is selected from a sodium salt, a potassium salt and combinations thereof. Most preferably, the alkali metal salt of an organic acid is a sodium salt.

Another aspect of the invention relates to a process of preserving a fresh food by coating the fresh food with the particulate food preservative composition according to the present invention or by immersing the fresh food in a bed of the particulate food preservative composition according to the invention, said process being defined by claim 6. Examples of fresh foods that may be preserved by the present process include fish, meat and vegetables. Most preferably, the fresh food is fish.

In a preferred embodiment of the present invention, the fresh food remains in intimate contact with the particulate food preservative composition for at least 4 hours, more preferably for at least 8 hours and most preferably for 10-84 hours.

A further aspect of the invention relates to the use of the particulate food preservative composition of the present invention for the preservation of a fresh food, especially a fresh food selected from fish, meat and vegetables, most preferably fresh food in the form of fish, said use being defined by claim 7.

Yet another aspect of the invention relates to a method of preparing a preservative granulate as defined in claim 8.

The chloride salt powder that is employed in the powder blend, preferably has a volume weighted mean diameter in the range of 50-350 µm, more preferably in the range of 80-300 µm, as determined by laser diffraction.

Preferably, the chloride salt powder contains at least 80 wt.% of chloride salt selected from sodium chloride, potassium chloride and combinations thereof. More preferably, the chloride salt powder contains at least 90 wt.% of chloride salt selected from sodium chloride, potassium chloride and combinations thereof. Most preferably, the chloride salt powder contains at least 90 wt.% of sodium chloride.

The organic acid salt powder used in the preparation of the powder blend, preferably has a volume weighted mean diameter in the range of 50-350 µm, more preferably of 80-300 µm, as determined by laser diffraction.

The organic acid salt powder preferably contains at least 80 wt.% of an alkali metal salt of acetic acid. More preferably, the organic acid powder contains at least 80 wt.% of sodium acetate.

The powder blend preferably comprises 20-70 wt.%, more preferably 30-68 wt.% and most preferably 35-70 wt.% of the chloride salt powder.

The organic acid salt powder preferably is contained in the powder blend in a concentration of 25-80 wt.%, more preferably of 28-70 wt.% and most preferably of 30-65 wt.%.

In a particularly preferred embodiment of the present method, the compacting is performed by means of roller compaction. In roller compaction a powder is compacted between two counter rotating rolls.

Compacting of the powder blend is performed at a compaction force of 8-64 kN/cm. More preferably, compacting is performed at a compaction force of 10-54 kN/cm, most preferably at a compaction force of 12-44 kN/cm.

In yet another preferred embodiment, the compacted powder blend is subject to a size reduction step, e.g. by grinding or milling the compacted powder blend. Following size reduction, the compacted powder blend is preferably sieved to remove coarse particles. To achieve this preferably a sieve having a pore size of 1000-2400 µm, more preferably of 1100-2000 µm and most preferably 1200-1800 µm, is used.

Following size reduction, the compacted powder blend is advantageously sieved to remove fine particles. This may suitably be achieved by using a sieve having pore size of 100-500 µm, more preferably of 150-450 µm and most preferably of 180-400 µm.

The volume weighted mean diameter of the compacted powder blend after size reduction and sieving preferably is in the range of 300-1500 µm, more preferably in the range of 400-1200 µm and most preferably in the range of 500-1000 µm, as determined by laser diffraction.

In the present method the volume weighted mean diameter of the compacted powder blend after size reduction and sieving typically is at least twice the volume weighted mean diameter of the chloride salt powder and/or the organic acid salt powder, the respective mean diameters being determined by laser diffraction.

The organic acid salt powder that is applied in the present method has an aerated density of 0.25-0.60 g/ml, more preferably of 0.3-0.5 g/ml.

The chloride salt powder employed in the method has an aerated density of 1.1-1.6 g/ml, more preferably 1.2-1.5 g/ml.

The aerated density of the compacted powder blend after size reduction and sieving preferably lies in the range of 0.5-1 g/ml, more preferably in the range of 0.6-0.9 g/ml. According to a particularly preferred embodiment, the present method produces preservation granules as described herein before.

The invention is further illustrated by the following non-limiting examples.

### EXAMPLES

### Example 1

Food preservative compositions according to the present invention, in the form of compacted granulates, were prepared on pilot scale (10-20 kg/h) from powder mixes having the compositions shown in Table 1.

**Table 1**

| | **Wt.%** | |
|---|---|---|
| | **1** | **2** |
| Sodium chloride | 50 | 67 |
| Verdad^{®} Powder N6 ¹ | 50 | 33 |

| | | |
|---|---|---|
| ₁ ex Corbion Purac, from white distilled vinegar (moisture content 9-15%, free acidity 5-7%) | | |

The powders mixes were prepared in a plough mixer at 110 rpm for 3 minutes (RH ≈30%).

Next, the powder mixes were compacted at compacting force of 12 kN/cm using a roller compactor (ex. Alexanderwerk, type WP-75) equipped with a 1600 µm flat screen and a grinder. Coarse material and fines were removed from the ground, compacted granulate by sieving, using a bottom cut of 300 µm and a top cut of 1400 µm.

The food preservative compositions so obtained were analyzed. The results of the analyses are shown in Table 2.

**Table 2**

| | **Wt.%** | |
|---|---|---|
| | **1** | **2** |
| Sodium chloride | 44 | 51 |
| Sodium acetate | 49 | 40 |
| Acetate ¹ | 37 | 31 |
| Water | 8 | 9 |

| | | |
|---|---|---|
| ¹ Including acetic acid | | |

The particle size distributions and the aerated densities of the granulates and of the powder used in their preparation are listed in Table 3.

**Table 3**

| | **D[4,3]** | **Aerated density** |
|---|---|---|
| Sodium chloride | 160 | 1.25 |
| Verdad^{®} Powder N6 | 220 | 0.35 |
| Granulate 1 | 635 | 0.78 |
| Granulate 2 | 650 | 0.74 |

The granulates 1 and 2, when used in salting fish, are more effective against *Listeria monocytogenes* than an equal amount of ordinary salt.

### Example 2

Tests were conducted to determine the compactability of different blends of chloride salt and alkali metal salt of organic acid. The compositions of the tested powder blends are shown in Table 4.

**Table 4**

| | **Wt.%** | | | |
|---|---|---|---|---|
| | **1** | **2** | **3** | **4** |
| NaCl | 50 | | | |
| MgCl₂ | | | | 50 |
| KCl | | 50 | 40 | |
| Verdad^{®} Powder N6 | 50 | 50 | 40 | |
| Purasal^{®} Powder S100 ¹ | | | 20 | |
| Verdad^{®} Powder N30 ² | | | | 50 |

| | | | | |
|---|---|---|---|---|
| ¹ ex Corbion Purac (sodium lactate min. 98.5% (w/w), water content max. 1.0% (w.w)) ² ex Corbion Purac (powder from fermented product, containing sodium salts of a.o. propionic acid, lactic acid and acetic acid) | | | | |

To determine whether these powder blends could be compacted to form a granulate as described in Example 1, one gram of each powder was placed in an aluminium mould. The mould was centrally placed on top of a die set to be pressed underneath a flat faced top bolster. Each powder was pressed under 5 tons pressure for 30 s. After releasing the pressure, the mould was taken off and compacted material was separated from remaining loose powder. Each of these components was weighed in precision balance. The results are shown in Table 5.

**Table 5**

| | **Wt.%** | | | |
|---|---|---|---|---|
| | **1** | **2** | **3** | **4** |
| Compacted material | 80 | 90 | 70 | 80 |
| Loose powder | 20 | 10 | 30 | 20 |

These results indicate that all the powder blends tested can suitably be compacted by roller compaction.

## Claims

1. A particulate food preservative composition having an aerated density of 0.5-1.0 g/mL determined with a Hosokawa Micron Powder Characteristics Tester PT-N model,
said composition comprising at least 60 wt.% of preservation granules having a diameter in the range of 300-1500 µm as determined by laser diffraction, wherein the preservation granules are compacted agglomerates of:
a. particles containing at least 90 wt.% of chloride salt, said particles having a volume weighted mean diameter in the range of 30-400 µm; and
b. particles containing at least 70 wt.% of alkali metal salt of organic acid, said particles having a volume weighted mean diameter in the range of 30-400 µm;
said preservation granules comprising (i) at least 20 wt.% of chloride salt selected from sodium chloride, potassium chloride, magnesium chloride and combinations thereof; and (ii) 25-65 wt.% of an alkali metal salt of an organic acid selected from acetic acid, lactic acid, propionic acid and combinations thereof;
the combination of the chloride salt and the alkali metal salt of an organic acid constituting at least 80 wt.% of the dry matter that is contained in the preservation granules; wherein the particles containing the chloride salt and the particles containing the alkali metal salt of organic acid are not bonded within the preservation granules by binding agent.

2. Food preservative composition according to claim 1, wherein the preservation granules contain 20-75 wt.% sodium chloride.

3. Food preservative composition according to claim 1 or 2, wherein the preservation granules contain 28-65 wt.% of the alkali metal salt of an organic acid.

4. Food preservative composition according to any one of the preceding claims, wherein the alkali metal salt of an organic acid, is an alkali metal salt of acetic acid.

5. Food preservative composition according to any one of the preceding claims, wherein the preservation granules consist of the particles containing the chloride salt and the particles containing the alkali metal salt of organic acid.

6. A process of preserving a fresh food by coating the fresh food with the particulate food preservative composition according to any one of the preceding claims or by immersing the fresh food in a bed of the particulate food preservative composition according to any one of the preceding claims.

7. Use of the particulate food preservative composition according to any one of claims 1-5 for the preservation of a fresh food.

8. A method of preparing a preservative granulate comprising the steps of:
• providing a powder blend comprising:
(i) at least 20 wt.% of chloride salt powder having a volume weighted mean diameter in the range of 30-400 µm as determined by laser diffraction, having an aerated density of 1.1-1.6 g/mL determined with a Hosokawa Micron Powder Characteristics Tester PT-N model and containing at least 80 wt.% of chloride salt selected from sodium chloride, potassium chloride, magnesium chloride and combinations thereof; and
(ii) 25-65 wt% of an organic acid salt powder, said organic acid salt powder having a volume weighted mean diameter in the range of 30-400 µm as determined by laser diffraction, having an aerated density of 0.25-0.60 g/mL determined with a Hosokawa Micron Powder Characteristics Tester PT-N model and containing at least 80 wt.% of an alkali metal salt of an organic acid selected from acetic acid, lactic acid, propionic acid and combinations thereof;
the combination of the chloride salt and the alkali metal salt of an organic acid constituting at least 80 wt.% of the dry matter that is contained in the powder blend;
• compacting said powder blend at a compaction force of 8-64 kN/cm and without using any binding agents.

9. Method according to claim 8, wherein the compacted powder blend is subjected to a size reduction step.

10. Method according to claim 9, wherein, following size reduction, the compacted powder blend is sieved using a sieve having pore size of 1000-2400 µm to remove coarse particles.

11. Method according to claim 9 or 10, wherein, following size reduction, the compacted powder blend is sieved using a sieve having pore size of 100-500 µm to remove small particles.

12. Method according to claim 10 or 11, wherein, after size reduction and sieving, the volume weighted mean diameter of the compacted powder blend is at least twice the volume weighted mean diameter of the chloride salt powder and/or the organic acid salt powder, the respective mean diameters being determined by laser diffraction.

13. Method according to any one of claims 10-12, wherein, after size reduction and sieving, the volume weighted mean diameter of the compacted powder blend is 200-1000 µm as determined by laser diffraction.

## Patentansprüche

1. Teilchenförmige Lebensmittelkonservierungszusammensetzung mit einer belüfteten Dichte, bestimmt mit einem Hosokawa Micron Powder Characteristics Tester PT-N Modell, von 0,5-1,0 g/mL,
wobei die Zusammensetzung mindestens 60 Gew.-% Konservierungskörnchen mit einem Durchmesser im Bereich von 300-1500 µm, wie durch Laserbeugung bestimmt, umfasst, wobei die Konservierungskörnchen verdichtete Agglomerate sind aus:
a. Teilchen, die mindestens 90 Gew.-% Chloridsalz enthalten, wobei die Teilchen einen volumengewichteten mittleren Durchmesser im Bereich von 30-400 µm aufweisen; und
b. Teilchen, die mindestens 70 Gew.-% Alkalimetallsalz einer organischen Säure enthalten, wobei die Teilchen einen volumengewichteten mittleren Durchmesser im Bereich 30-400 µm aufweisen;
wobei die Konservierungskörnchen (i) mindestens 20 Gew.-% Chloridsalz, ausgewählt aus Natriumchlorid, Kaliumchlorid, Magnesiumchlorid und Kombinationen davon, enthalten; und
(ii) 25-65 Gew.-% eines Alkalimetallsalzes einer organischen Säure, ausgewählt aus Essigsäure, Milchsäure, Propionsäure und Kombinationen davon, enthalten;
wobei die Kombination des Chloridsalzes und des Alkalimetallsalzes einer organischen Säure mindestens 80 Gew.-% der Trockenmasse, die in den Konservierungskörnchen enthalten ist, ausmacht; wobei die Teilchen, die das Chloridsalz enthalten, und die Teilchen, die das Alkalimetallsalz der organischen Säure enthalten, nicht in den Konservierungskörnchen durch ein Bindemittel gebunden sind.

2. Lebensmittelkonservierungszusammensetzung nach Anspruch 1, wobei die Konservierungskörnchen 20-75 Gew.-% Natriumchlorid enthalten.

3. Lebensmittelkonservierungszusammensetzung nach Anspruch 1 oder 2, wobei die Konservierungskörnchen 28-65 Gew.-% des Alkalimetallsalzes einer organischen Säure enthalten.

4. Lebensmittelkonservierungszusammensetzung nach einem der vorhergehenden Ansprüche, wobei das Alkalimetallsalz einer organischen Säure ein Alkalimetallsalz von Essigsäure ist.

5. Lebensmittelkonservierungszusammensetzung nach einem der vorhergehenden Ansprüche, wobei die Konservierungskörnchen aus den Teilchen bestehen, die das Chloridsalz enthalten und den Teilchen, die das Alkalimetallsalz einer organischen Säure enthalten.

6. Verfahren für die Konservierung eines frischen Lebensmittels durch Beschichten des Lebensmittels mit der Lebensmittelkonservierungszusammensetzung nach einem der vorhergehenden Ansprüche oder durch Eintauchen des frischen Lebensmittels in ein Bett der teilchenförmigen Lebensmittelkonservierungszusammensetzung nach einem der vorhergehenden Ansprüche.

7. Verwendung der teilchenförmigen Lebensmittelkonservierungszusammensetzung nach einem der Ansprüche 1 bis 5 für die Konservierung eines frischen Lebensmittels.

8. Verfahren für die Zubereitung eines Konservierungsgranulats, umfassend die Schritte:
• Bereitstellen einer Pulvermischung, umfassend:
(i) mindestens 20 Gew.-% Chloridsalzpulver mit einem volumengewichteten mittleren Durchmesser im Bereich von 30-400 µm, bestimmt durch Laserbeugung, mit einer mit einem Hosokawa Micron Powder Characteristics Tester PT-N Modell bestimmten belüfteten Dichte von 1,1-1,6 g/mL, und mindestens 80 Gew.-% Chloridsalz, ausgewählt aus Natriumchlorid, Kaliumchlorid, Magnesiumchlorid und Kombinationen davon, enthaltend; und
(ii) 25-65 Gew.-% eines organischen Säuresalzpulvers, wobei das organische Säuresalzpulver einen volumengewichteten mittleren Durchmesser im Bereich von 30-400 µm, bestimmt durch Laserbeugung, aufweist, mit einer mit einem Hosokawa Micron Powder Characteristics Tester PT-N Modell bestimmten belüfteten Dichte von 0,25-0,60 g/mL,
und mindestens 80 Gew.-% eines Alkalimetallsalzes einer organischen Säure, ausgewählt aus Essigsäure, Milchsäure, Propionsäure und Kombinationen davon, enthaltend;
wobei die Kombination des Chloridsalzes und des Alkalimetallsalzes einer organischen Säure mindestens 80 Gew.-% der Trockenmasse, die in der Pulvermischung enthalten ist, ausmacht;
• Verdichten der Pulvermischung durch eine Verdichtungskraft von 8-64 kN/cm und ohne Verwendung von Bindemitteln.

9. Verfahren nach Anspruch 8, wobei die verdichtete Pulvermischung einem Größenreduktionsschritt unterzogen wird.

10. Verfahren nach Anspruch 9, wobei, infolge der Größenreduktion, die verdichtete Pulvermischung unter Verwendung eines Siebes mit einer Porengröße von 1000-2400 µm gesiebt wird, um grobe Teilchen zu entfernen.

11. Verfahren nach Anspruch 9 oder 10, wobei, infolge der Größenreduktion, die verdichtete Pulvermischung gesiebt wird unter Verwendung eines Siebs mit einer Porengröße von 100-500 µm, um kleine Teilchen zu entfernen.

12. Verfahren nach Anspruch 10 der 11, wobei, nach der Größenreduktion und dem Sieben, der volumengewichtete mittlere Durchmesser der verdichteten Pulvermischung wenigstens zweimal der volumengewichtete mittlere Durchmesser des Chloridsalzpulvers und/oder des organischen Säuresalzpulvers ist, wobei die entsprechenden mittleren Durchmesser durch Laserbeugung bestimmt werden.

13. Verfahren nach einem der Ansprüche 10 bis 12, wobei, nach der Größenreduktion und dem Sieben, der volumengewichtete mittlere Durchmesser der verdichteten Pulvermischung 200-1000 µm, bestimmt durch Laserbeugung, ist.

## Revendications

1. Composition de conservation d'aliment particulaire présentant une densité aérée de 0,5 à 1,0 g/mL déterminée avec un modèle PT-N de testeur de caractéristiques de poudre micronique d'Hosokawa, ladite composition comprenant au moins 60 % en poids de granulés de conservation présentant un diamètre dans la plage de 300 à 1 500 µm tel que déterminé par diffraction laser, dans laquelle les granulés de conservation sont des agglomérats compactés de :
a. particules contenant au moins 90 % en poids de sel de chlorure, lesdites particules présentant un diamètre moyen pondéré en volume dans la plage de 30 à 400 µm ; et
b. particules contenant au moins 70 % en poids de sel de métal alcalin d'acide organique, lesdites particules présentant un diamètre moyen pondéré en volume dans la plage de 30 à 400 µm ;
lesdits granulés de conservation comprenant (i) au moins 20 % en poids d'un sel de chlorure sélectionné parmi le chlorure de sodium, le chlorure de potassium, le chlorure de magnésium et des combinaisons de ceux-ci ; et (ii) de 25 à 65 % en poids d'un sel de métal alcalin d'un acide organique sélectionné parmi de l'acide acétique, de l'acide lactique, de l'acide propionique et des combinaisons de ceux-ci ;
la combinaison du sel de chlorure et du sel de métal alcalin d'un acide organique constituant au moins 80 % en poids de la matière sèche qui est contenue dans les granulés de conservation ; dans lequel les particules contenant le sel de chlorure et les particules contenant le sel de métal alcalin d'acide organique ne sont pas liées dans les granulés de conservation par un agent liant.

2. Composition de conservation d'aliment selon la revendication 1, dans laquelle les granulés de conservation contiennent de 20 à 75 % en poids de chlorure de sodium.

3. Composition de conservation d'aliment selon la revendication 1 ou 2, dans laquelle les granulés de conservation contiennent de 28 à 65 % en poids du sel de métal alcalin d'un acide organique.

4. Composition de conservation d'aliment selon l'une quelconque des revendications précédentes, dans laquelle le sel de métal alcalin d'un acide organique est un sel de métal alcalin d'acide acétique.

5. Composition de conservation d'aliment selon l'une quelconque des revendications précédentes, dans laquelle les granulés de conservation sont constitués des particules contenant le sel de chlorure et des particules contenant le sel de métal alcalin d'acide organique.

6. Procédé de conservation d'un aliment frais par enrobage de l'aliment frais avec la composition de conservation d'aliment particulaire selon l'une quelconque des revendications précédentes ou par immersion de l'aliment frais dans un lit de la composition de conservation d'aliment particulaire selon l'une quelconque des revendications précédentes.

7. Utilisation de la composition particulaire de conservation d'aliment selon l'une quelconque des revendications 1 à 5 pour la conservation d'un aliment frais.

8. Procédé de préparation d'un granulé conservateur comprenant les étapes consistant à :
• fournir un mélange de poudres comprenant :
(i) au moins 20 % en poids de poudre de sel de chlorure présentant un diamètre moyen pondéré en volume dans la plage de 30 à 400 µm tel que déterminé par diffraction laser, présentant une densité aérée de 1,1 à 1,6 g/mL déterminée avec un modèle PT-N de testeur de caractéristiques de poudre micronique Hosokawa et contenant au moins 80 % en poids de sel de chlorure sélectionné parmi le chlorure de sodium, le chlorure de potassium, le chlorure de magnésium et des combinaisons de ceux-ci ; et
(ii) de 25 à 65 % en poids d'une poudre de sel d'acide organique, ladite poudre de sel d'acide organique présentant un diamètre moyen pondéré en volume dans la plage de 30 à 400 µm tel que déterminé par diffraction laser, présentant une densité aérée de 0,25 à 0,60 g/mL déterminée avec un modèle PT-N de testeur de caractéristiques de poudre micronique Hosokawa et contenant au moins 80 % en poids d'un sel de métal alcalin d'un acide organique sélectionné parmi l'acide acétique, l'acide lactique, l'acide propionique et des combinaisons de ceux-ci ;
la combinaison du sel de chlorure et du sel de métal alcalin d'un acide organique constituant au moins 80 % en poids de la matière sèche qui est contenue dans le mélange de poudres ;
• Compacter ledit mélange de poudres à une force de compactage de 8 à 64 kN/cm et sans utiliser de liant.

9. Procédé selon la revendication 8, dans lequel le mélange de poudres compactée est soumis à une étape de réduction de taille.

10. Procédé selon la revendication 9, dans lequel, après la réduction de taille, le mélange de poudres compacté est tamisé en utilisant un tamis présentant une taille de pore de 1 000 à 2 400 µm pour éliminer des particules grossières.

11. Procédé selon la revendication 9 ou 10, dans lequel, après la réduction de taille, le mélange de poudres compacté est tamisé en utilisant un tamis présentant une taille de pore de 100 à 500 µm pour éliminer des petites particules.

12. Procédé selon la revendication 10 ou 11, dans lequel, après réduction de taille et tamisage, le diamètre moyen pondéré en volume du mélange de poudres compacté est au moins deux fois le diamètre moyen pondéré en volume de la poudre de sel de chlorure et/ou de la poudre de sel d'acide organique, les diamètres moyens respectifs étant déterminés par diffraction laser.

13. Procédé selon l'une quelconque des revendications 10 à 12, dans lequel, après réduction de taille et tamisage, le diamètre moyen pondéré en volume du mélange de poudre compacté est de 200 à 1 000 µm, tel que déterminé par diffraction laser.
